# EUROPEAN PATENT APPLICATION

(11) **EP 2 336 064 A2**
(43) Date of publication of application: **22.06.2011**
(21) Application number: 10191413.3
(22) Date of filing: 16.11.2010
(51) Int. Cl.: B65H 54/44, B65H 54/553, B65H 54/74, H02K 7/08, H02K 11/00

(54) **Yarn winding machine**

(30) Priority: 16.12.2009 JP 2009285284
(71) Applicant: Murata Machinery, Ltd., Minami-ku Kyoto-shi Kyoto 601-8326 (JP)
(72) Inventor: Kino, Yoshihiro, Kyoto Kyoto 612-8686 (JP); HIirakawa, Masami, Kyoto Kyoto 612-8686 (JP)
(74) Representative: Vogeser, Werner

(57) **Abstract**

A motor of an automatic winder includes a casing, stators, a rotor, a first bearing, and a second bearing. The stators are fixed to the casing. The rotor is arranged inside the stators. The first bearing and the second bearing are arranged facing each other to provide support to two ends of the rotor. An opposing face of the first bearing that faces the second bearing is positioned closer to the second bearing than a bobbin holder side end face of the stator. An opposing face of the second bearing that faces the first bearing is positioned closer to the first bearing than a sensor side end face of the stator.

## Description

### BACKGROUND OF THE INVENTION

### 1. Field of the Invention

The present invention relates to a yarn winding machine, and more particularly, to a driving section that rotationally drives a winding tube.

### 2. Description of the Related Art

In automatic winders (yarn winding machines) that include a plurality of winder units arranged in parallel, providing a motor (driving section) for each winder unit is a conventionally known technique. This type of winder unit is disclosed, for example, in Patent Document 1. The winder unit disclosed in Patent Document 1 employs a so-called direct-drive method in which a motor is arranged in a cradle that grips a package and a winding bobbin is rotated by rotation of the motor.

The motor mounted on the cradle is required to have a higher torque when the intended package is larger. In the above-explained automatic winder, to increase the productivity, it is preferable to provide as many winder units as possible in the limited space. Thus, the space available for placing the winder units is limited, and hence placing a larger motor, which is required for a higher torque, would pose difficulty. Using a motor that is smaller in an axial direction can be one approach to solve this problem. For example, a motor for a vehicle is disclosed in Patent Document 2, and even though the technological field is different from that of the present invention, Patent Document 2 describes a configuration for making a motor small in the axial direction.

Patent Document 2 discloses an inner rotor type rotating machine (motor) in which a rotor arranged inside stators fixed to a casing is rotatably supported in the casing via at least one bearing. In this inner rotor type rotating machine, a supporting unit protrudes from an inner wall of the casing into a hollow interior of a rotor shaft. The inner rotor type rotating machine has a configuration in which an inner race of the bearing is supported by an outer peripheral surface of the supporting unit while an outer race is supported by an inner peripheral surface of the rotor shaft.
Patent Document 1: Japanese Patent Application Laid-open No. 2006-321615
Patent Document 2: Japanese Patent Application Laid-open No. 2006-166491

The motor disclosed in Patent Document 2 has a configuration in which one end of the rotor is supported by the bearing from the inside while the other end of the rotor is supported by the bearing from the outside. In such a structure, it is difficult to make a rotational center at one end of the rotor to coincide precisely with a rotational center at other end of the rotor, as compared to a rotor in which both the ends of the rotor are supported from the outside, leading to a possibility of occurrence of shaking of the shaft during rotation. A stable rotational drive of the motor is necessary in the automatic winders for realizing an ideal quality of the package. Therefore, shaking of the shaft needs to be suppressed as much as possible.

### SUMMARY OF THE INVENTION

The present invention has been made to address the above-explained problems. It is an object of the present invention to provide a driving section in a yarn winding machine that is compact in an axial direction of a rotor and that performs a stable rotational drive of a winding bobbin.

This problem is solved by claim 1
At least one of the bearings can be positioned closer to the opposing bearing than an end face on one side of the stators in an axial direction of the rotor. Thus, at least one of the bearings is positioned inside the stators. As a result, the dimension of the driving section in the axial direction can be made more compact, and a space-efficient yarn winding machine can be achieved.

By forming at least one groove on an end face of the rotor, and accommodating at least one of the bearings at least partially inside the grooves a lighter rotor can be realized, the inertia of the rotor can be reduced, and the responsiveness of the driving section can be effectively increased. Therefore, control of a rotational speed of the winding tube, winding commencement, winding termination, etc., can be performed smoothly and at precise timings. As a result, the yarn can be wound well on the winding tube. Furthermore, by accommodating the bearing inside the groove, the driving section that has a larger torque while being compact in the axial direction can be achieved by increasing a diameter of the rotor.

In the yarn winding machine, the casing includes bearing supporting units that provide support to the bearings. At least the bearing supporting units of the casing are made of a non-magnetic material. Thus, the bearing supporting units are not magnetized. As a result, even if one bearing is arranged closer towards the opposing bearing, an adverse effect on the rotation of the rotor due to the magnetized bearing supporting units can be reliably prevented.

In the yarn winding machine, it is preferable that the rotor directly drives the winding tube. With such an arrangement, the rotational drive of the winding tube can be controlled more precisely. Because the driving section that is used is compact in the axial direction, the structure used for direct driving of the winding tube can be made compact in the axial direction.

In the yarn winding machine, a winding tube supporting unit is provided that rotatably supports the winding tube, and on which the driving section is arranged. The winding tube supporting unit is constructed to be openable and closable to enable the winding tube to attach to and detach from the winding tube supporting unit. With such an arrangement, even if not enough space for opening and closing of the winding tube supporting unit can be secured, because of the compactness in the axial direction of the driving section used, there is no interference of the winding tube supporting unit on which the driving section is mounted with other parts. As a result, the opening and closing operations of the winding tube supporting unit to enable the winding tube to attach to and detach from the winding tube supporting unit are appropriately performed.

In the yarn winding machine, a rotation detecting unit is arranged on an end portion of the rotor in the axial direction of the rotor or a member that rotates integrally with the rotor. The rotation detecting unit is arranged on an opposite side of the rotor with the bearing therebetween. With such an arrangement, a structure is possible in which the rotation detecting unit is integral with the driving section while maintaining the compactness of the driving section in the axial direction. Thus, efficiency can be achieved in an assembly operation of the driving section. Furthermore, because the rotation of the rotor or the member that rotates integrally with the rotor can be detected directly, a precise rotational speed of the winding tube can be obtained.

The yarn winding machine can include a draft roller that forms a fiber bundle by drafting a sliver. The rotor rotationally drives the draft roller. As a result, a rotational drive of the draft roller can be controlled more precisely. Because the driving section that is used is compact in the axial direction, the structure used for driving the draft roller can be made compact in the axial direction.

The yarn winding machine further can include a yarn storing roller that temporarily stores yarn that is wound into a package. The rotor rotationally drives the yarn storing roller. As a result, a rotational drive of the yarn storing roller can be controlled more precisely. Because the driving section that is used is compact in the axial direction, the structure used for driving the yarn storing roller can be made compact in the axial direction.

### BRIEF DESCRIPTION OF THE DRAWINGS

FIG. 1 is a schematic diagram of a winder unit of an automatic winder according to an embodiment of the present invention;
FIG. 2 is a perspective sectional view of a motor that schematically depicts an internal arrangement;
FIG. 3 is a sectional view of the motor that schematically depicts the internal arrangement; and
FIG. 4 is a schematic diagram of a rotor viewed from a bobbin holder side.

### DETAILED DESCRIPTION OF THE PREFERRED EMBODIMENTS

Exemplary embodiments of the present invention are explained below with reference to the accompanying drawings. An automatic winder (yarn winding machine) according to an embodiment of the present invention includes a plurality of winder units 10 that is arranged in a line, a not shown main control device arranged at one end of the line, and a not shown setting device provided in front of the main control device.

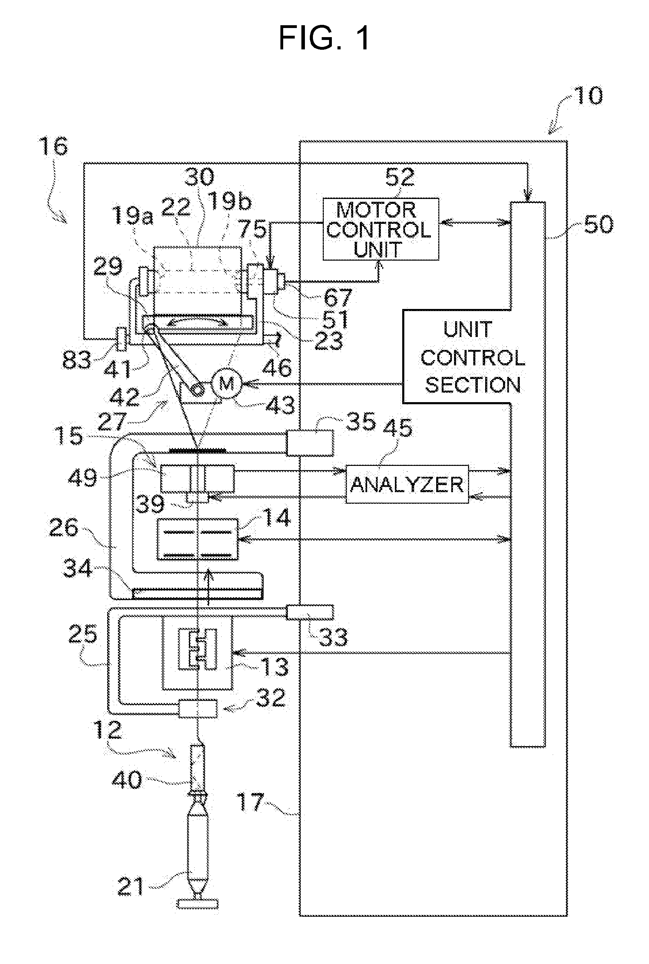

The winder unit 10 shown in FIG. 1 winds a yarn unwound from a yarn supplying bobbin 21 on a winding bobbin (winding tube) 22 while traversing the yarn to form a package 30 of a predetermined length and shape. Each winder unit 10 includes a unit control section 50 and a winding unit main body 16.

The unit control section 50, for example, includes a Central Processing Unit (CPU), a Random Access Memory (RAM), a Read-only Memory (ROM), an (Input and Output) I/O port, and a communication port. A computer program for controlling each of the structural elements of the winding unit main body 16 is recorded in the ROM. Apart from the setting device, various structural elements (explained later) of the winding unit main body 16 are connected to the I/O port and the communication port to enable communication of control information and communication with the structural elements.

In a yarn running path between the yarn supplying bobbin 21 and a contact roller 29 in the winding unit main body 16, a yarn unwinding assisting device 12, a tension applying device 13, a splicer device 14, and a clearer 15 are arranged in the mentioned order from the side of the yarn supplying bobbin 21. All the above-mentioned parts of the winding unit main body 16 are supported by a housing 17 of the winding unit main body 16.

The yarn unwinding assisting device 12 includes a regulating member 40 arranged around a core tube of the yarn supplying bobbin 21. The yarn unwinding assisting device 12 assists the unwinding of the yarn from the yarn supplying bobbin 21 by lowering the regulating member 40 as the yarn is unwound from the yarn supplying bobbin 21. The regulating member 40 touches a balloon that is formed above the yarn supplying bobbin 21 by spinning and a centrifugal force of the yarn being unwound from the yarn supplying bobbin 21. The regulating member 40 assists the unwinding of the yarn by appropriately controlling a size of the balloon. A not shown sensor that detects a chase part of the yarn supplying bobbin 21 is provided near the regulating member 40. When this sensor detects a lowering of the chase part, the regulating member 40 is lowered, for example, by the operation of an air cylinder (not shown), following the lowering of the chase part.

The tension applying device 13 applies a predetermined tension to the running yarn. As the tension applying device 13, for example, a gate type can be used in which movable comb teeth are provided with respect to fixed comb teeth. The movable comb teeth can be operated by the action of a rotary solenoid so as to be engaged with or released from the fixed comb teeth. The tension applying device 13 is operative to improve the quality of the package 30 by applying a constant tension on the yarn that is wound on the package 30. Meanwhile, as the tension applying device 13, a disc type can be used instead of the gate type.

The splicer device 14 splices a lower yarn on the yarn supplying bobbin 21 side and an upper yarn on the package 30 side when the yarn is cut upon detection of a yarn defect by the clearer 15 or when the yarn breaks while being unwound from the yarn supplying bobbin 21. A mechanical device, a device that employs pneumatic fluid, etc., can be used as a yarn splicing device that splices the upper yarn and the lower yarn.

The clearer 15 that serves as a yarn quality measuring device includes a clearer head 49 and an analyzer 45. A not shown sensor that detects a thickness of the yarn is arranged in the clearer head 49. The analyzer 45 processes a yarn thickness signal received from the sensor. The clearer 15 detects yarn defects, such as a slub, by monitoring the yarn thickness signal of the sensor. A cutter 39 that cuts the yarn immediately upon detection of the yarn defect by the clearer 15 is arranged near the clearer head 49.

A lower-yarn guiding pipe 25 that catches and guides the lower yarn on the yarn supplying bobbin 21 side into the splicer device 14 is provided below the splicer device 14. An upper-yarn guiding pipe 26 that catches and guides the upper yarn on the package 30 side into the splicer device 14 is provided above the splicer device 14. The lower-yarn guiding pipe 25 is pivotable about a shaft 33. The upper-yarn guiding pipe 26 is pivotable about a shaft 35. A suction port 32 is provided at an end of the lower-yarn guiding pipe 25. A suction mouth 34 is provided at an end of the upper-yarn guiding pipe 26. An appropriate negative pressure source is connected to each of the lower-yarn guiding pipe 25 and the upper-yarn guiding pipe 26. The winder unit 10 has a configuration in which a suction flow is produced by the action of the negative pressure sources at the suction port 32 and the suction mouth 34, and the ends of the upper yarn and the lower yarn are caught due to the suction.

The winding unit main body 16 includes a cradle (winding tube supporting unit) 23 and the contact roller 29. The cradle 23 supports the winding bobbin (winding tube) 22 in a detachable manner. The contact roller 29 can be rotatably driven by making contact with a peripheral surface of the winding bobbin 22 or a peripheral surface of the package 30.

The cradle 23 includes a pair of cradle arms. Bobbin holders 19a and 19b are rotatably mounted at respective ends of the cradle arms. The winding bobbin 22 is attached to the cradle 23 by being held between the bobbin holders 19a and 19b. A motor (driving section) 51 that drives the bobbin holder 19b is mounted on one of the cradle arms. An output shaft 75 of the motor 51 is fixed to the bobbin holder 19b. When the winding bobbin 22 is set on the cradle 23, the winding bobbin 22 and the output shaft 75 are coupled so as not to rotate relative to each other (this is the so-called direct-drive method). In this situation, if the motor 51 is driven, the package 30 (winding bobbin 22) is rotated, and the yarn is wound on the package 30.

A rotation sensor 67 is mounted on the motor 51 according to the present embodiment. The rotation sensor 67 according to the present embodiment detects a rotational speed of the winding bobbin 22 (rotational speed of the package 30). A rotation detection signal of the winding bobbin 22 obtained by the rotation sensor 67 is transmitted from the rotation sensor 67 to a motor control unit 52.

The motor control unit 52 exerts control over the motor 51. The motor control unit 52 exerts control over the rotational speed, running or stopping, etc., of the motor 51 based on information such as the rotational speed obtained by the rotation sensor 67 and a package diameter obtained by an angle sensor 83 explained later. The motor control unit 52 transmits the rotational speed received from the rotation sensor 67 to the unit control section 50.

The cradle 23 is supported by a rotation shaft 46. The cradle 23 is swingable so as to be close to or away from the contact roller 29. Thus, even if a yarn layer of the package 30 gradually gains in thickness due to the rotational drive of the motor 51, the cradle 23 swings to absorb the change in the yarn layer thickness. Consequently, the package 30 remains reliably in contact with the contact roller 29.

The angle sensor (a package diameter acquiring unit) 83 of an analog type that detects an angle (a swing angle) of the cradle 23 is mounted on the rotation shaft 46. The angle of the cradle 23 changes with an increase in the wound diameter of the package 30 due to the winding of the yarn into the package 30. An outer diameter of the yarn layer of the package 30 can be acquired from the swing angle of the cradle 23 detected by the angle sensor 83. The yarn can be traversed appropriately by exerting a control over a traversing device 27 based on the package diameter. The angle sensor 83 can be of a digital type. Any device that can detect the package diameter can be used as the angle sensor 83.

The traversing device 27 is arranged near the contact roller 29. The traversing device 27 includes a narrow elongated arm member 42, a hook-shaped traverse guide 41, and a traverse guide driving motor 43. The arm member 42 is pivotable about a spindle. The traverse guide 41 is formed on an end of the arm member 42. The traverse guide driving motor 43 drives the arm member 42. The traverse guide driving motor 43 causes the arm member 42 to pivot back and forth in the direction of a double-headed arrow shown in FIG. 1, thus causing the traversing device 27 to traverse the yarn. The traverse guide driving motor 43 according to the present embodiment is a servo motor. As explained above, an operation of the traverse guide driving motor 43 is controlled by the unit control section 50.

The winder unit 10 having the above-explained structure unwinds the yarn from the yarn supplying bobbin 21 and winds the yarn on the winding bobbin 22 to form the package 30 of a predetermined length.

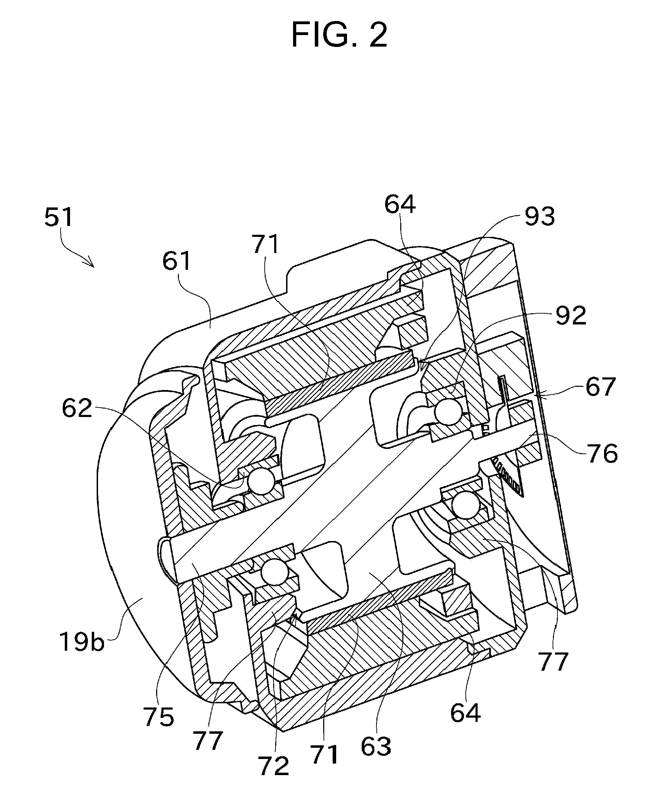

A structure of the motor 51 that rotationally drives the winding bobbin 22 is explained below with reference to FIGS. 2 to 4. Wherever the term "axial direction" appears alone in the following explanation, it refers to the axial direction of a rotor 63.

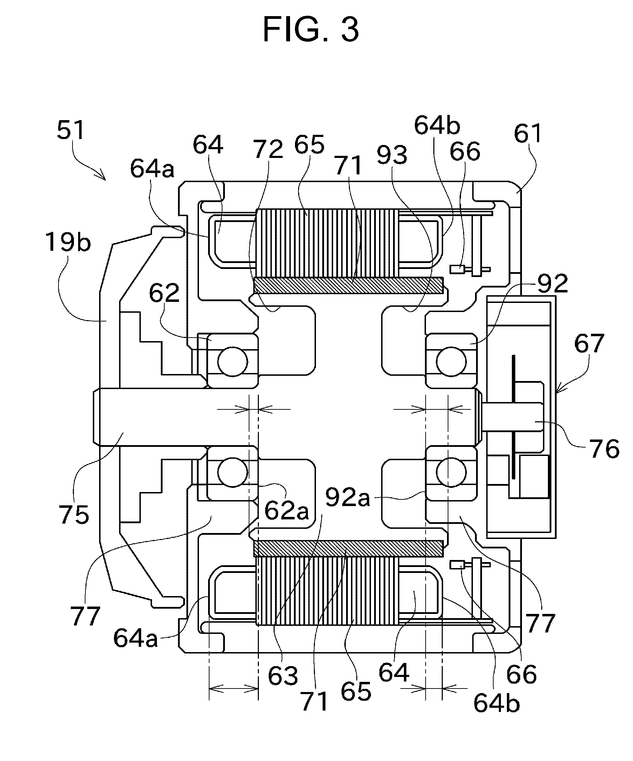

The motor 51 according to the present embodiment is an electric motor. More specifically, the motor 51 is an inner rotor type brushless motor. As shown in FIGS. 2 and 3, the motor 51 includes a casing 61, a first bearing 62, a second bearing 92, the rotor 63, stators 64, coils 65, position sensors 66, and the rotation sensor 67.

The casing 61 houses the various parts of the motor 51. The casing 61 includes two bearing supporting units 77, one each for supporting the first bearing 62 and the second bearing 92. In the casing 61 according to the present embodiment, the bearing supporting units 77 are made of a non-magnetic material such as aluminium.

The rotor 63 is substantially cylindrical in shape. Plural magnets 71 are mounted on an outer peripheral surface of the rotor 63 such that their north poles and south poles alternate in a rotation direction.

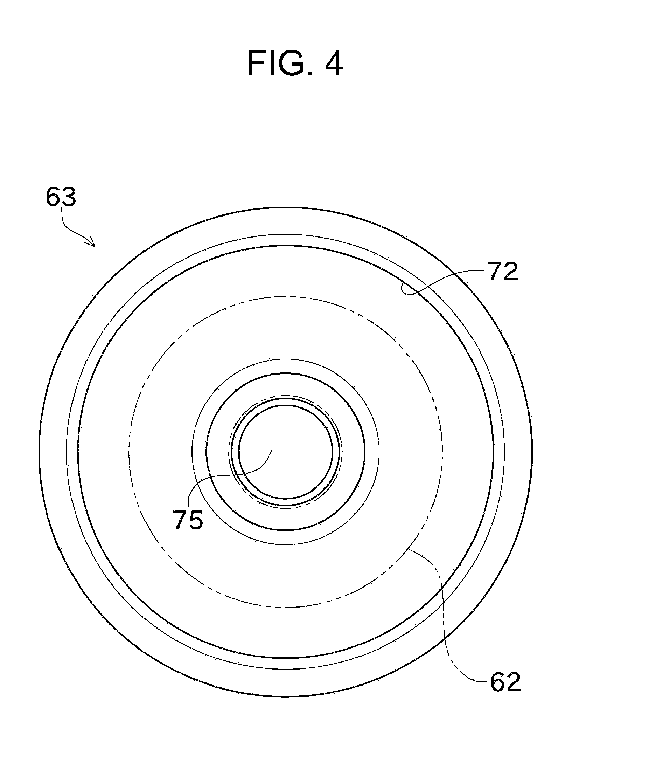

The output shaft 75 is integrally formed at an end of the rotor 63 in the axial direction thereof. The output shaft 75 directly drives the winding bobbin 22. More specifically, the output shaft 75 is directly coupled to a member that holds the winding bobbin 22 (i.e., the bobbin holder 19b). As shown in FIG. 4, a first groove (recess) 72 is formed on an end face of the rotor 63 on the bobbin holder 19b side. The first groove 72 surrounds the output shaft 75 and it is ring-shaped.

A detection shaft 76 is integrally formed at other end of the rotor 63 in the axial direction thereof (that is, on an end face that is opposite to the side which has the bobbin holder 19b and the winding bobbin 22). The rotation sensor 67, which is explained later, is arranged on the detection shaft 76. Similar to the end face of the rotor 63 on the bobbin holder 19b side, a ring-shaped second groove (recess) 93 is formed surrounding the detection shaft 76 on an end face of the rotor 63 on the rotation sensor 67 side. The first groove 72 and the second groove 93 have predetermined depths, and they function to reduce the weight of the rotor 63.

A plurality of the stators 64 is arranged around the outer periphery of the rotor 63 at equal intervals in a circumferential direction.

The coils 65 include U phase coils, V phase coils, and W phase coils and they are connected in a star connection. The coils 65 are arranged in the order of the U phase coil, the V phase coil, and the W phase coil in the clockwise direction and wound around the stators 64. The coils 65 are connected to the motor control unit 52. Application of a current to the coils 65 by the motor control unit 52 magnetizes the coils 65, creating a magnetic flux and inducing the rotor 63 to rotate.

The first bearing 62 supports the end of the rotor 63 on the bobbin holder 19b side. The second bearing 92 supports the end of the rotor 63 on the rotation sensor 67 side.

The first bearing 62 and the second bearing 92 are arranged in the casing 61 facing each other with the rotor 63 arranged therebetween. Due to this structure, the rotor 63 is rotatably supported at both the ends by the first bearing 62 and the second bearing 92.

The position sensor 66 includes a Hall sensor, etc., and it detects a variation in the magnetic flux of the magnets 71 that rotate with the rotor 63. The position sensor 66 is arranged in plurality around the rotor 63, corresponding to the U phase, the V phase, and the W phase, respectively. The motor control unit 52 determines positions of the magnets 71 based on a combination of statuses of signals received from the plurality of the position sensors 66. Then, based on this determination, the position sensor 66 decides whether a combination of the coils 65 to which the current is to be applied, and applies the current to those coils 65 at the appropriate timing.

The rotation sensor 67 includes a rotary encoder. As mentioned above, the rotation sensor 67 is provided on the detection shaft 76 that rotates integrally with the rotor 63. Therefore, the rotational speed of the rotor 63 (output shaft 75) can be obtained accurately.

The rotational speed obtained by the rotation sensor 67 is output to the motor control unit 52. The motor control unit 52 exerts control over the motor 51 based on the rotational speed, and outputs the rotational speed to the unit control section 50. The unit control section 50 exerts a synchronization control, etc., over the traversing device 27 based on the rotational speed obtained by the rotation sensor 67.

A positional relationship between the first bearing 62, the second bearing 92, the rotor 63, and the stators 64 is explained below.

In the following explanation, among the first bearing 62 and the second bearing 92 that are provided facing one another, the term "an opposing bearing" is used when referring to a bearing that opposes the bearing in question. Furthermore, the term "an opposing face" is used when referring to an end face of either the first bearing 62 or the second bearing 92 that faces the opposing bearing. In FIG. 3, an opposing face 62a represents the end face of the first bearing 62, and an opposing face 92a represents the end face of the second bearing 92. The bobbin holder 19b end side of the stator 64 is called a bobbin holder side end face 64a and the rotation sensor 67 end side of the stator 64 is called a sensor side end face 64b. The bobbin holder side end face 64a and the sensor side end face 64b of the stator 64 are formed orthogonal to the axial direction of the rotor 63.

As indicated by chain lines and arrows in FIG. 3, the first bearing 62 is supported by the bearing supporting unit 77 such that the opposing face 62a of the first bearing 62 is positioned closer to the second bearing 92 side than the bobbin holder side end face 64a of the stator 64. In other words, in the motor 51 according to the present embodiment, the bobbin holder side end face 64a, which is an outer end face of the stator 64, is positioned more to the outside than the opposing face 62a, which is an inner end face of the first bearing 62. Thus, the motor 51 according to the present embodiment has a configuration in which the first bearing 62 and the stator 64 overlap partially in a radial view of the rotor 63. Consequently, a space inside the casing 61 is effectively utilized in a direction orthogonal to the axial direction.

Furthermore, as indicated by the chain lines and arrows in FIG. 3, the opposing face 62a of the first bearing 62 is positioned closer to the second bearing 92 side than the end face of the rotor 63 on the output shaft 75 side. In other words, the first bearing 62 is supported by the bearing supporting unit 77 such that the first bearing 62 is partially accommodated inside the first groove 72 in the rotor 63. Thus, the space formed by the first groove 72 is effectively utilized by positioning the first bearing 62 inside in relation to the rotor 63.

The positional relationship of the second bearing 92 is similar to that of the first bearing 62. Specifically, as indicated by chain lines and arrows in FIG. 3, the second bearing 92 is supported by the bearing supporting unit 77 such that the opposing face 92a of the second bearing 92 is positioned closer to the first bearing 62 side than the sensor side end face 64b of the stator 64. In other words, in the motor 51, the sensor side end face 64b, which is an outer end face of the stator 64, is positioned more to the outside than the opposing face 92a, which is an inner end face of the second bearing 92.

The opposing face 92a of the second bearing 92 is positioned closer to the first bearing 62 side than the end face of the rotor 63 on the rotation sensor 67 side. In other words, the second bearing 92 is supported by the bearing supporting unit 77 such that the second bearing 92 is partially accommodated inside the second groove 93 in the rotor 63.

One of the methods for increasing a torque of the motor 51 is to increase a magnetic flux density by increasing the number of magnets mounted on the rotor 63. The present embodiment realizes the motor 51 that has a larger torque by increasing a diameter of the rotor 63, thus securing a larger surface area for mounting the magnets 71.

Increasing the diameter of the rotor 63 as explained above allows the first groove 72 and the second groove 93 to be made wider. Therefore, even larger first bearing 62 and second bearing 92 can be accommodated partially (or completely) on the inner side of the rotor 63. The larger first bearing 62 and second bearing 92 can further stably support the rotor 63.

Thus, a larger torque can be secured and, at the same time, a stable driving is realized by adopting the structure according to the present invention.

Due to the above-explained structure, the motor 51 rotationally drives the winding bobbin 22 directly to form the package 30 of the predetermined length. As mentioned above, because both the first groove 72 and the second groove 93 are circular, the first bearing 62 and the second bearing 92 do not collide with an inner wall of the rotor 63 even when the rotor 63 rotates. Furthermore, the bearing supporting units 77 are made of a non-magnetic material. Therefore, the bearing supporting units 77 are not magnetized, and hence the bearing supporting units 77 will not produce a magnetic flux that can hamper the rotation of the rotor 63.

Upon detection of the package 30 attaining the predetermined length, the unit control section 50 exerts control over the motor 51 via the motor control unit 52 to stop the rotation of the winding bobbin 22. The fully-wound package 30 is taken off the cradle 23 by a not shown doffing device. During the doffing operation, the cradle arm on one side (cradle arm on the side where the motor 51 is arranged) is pivoted to separate from the cradle arm on the other side. Due to this, the bobbin holder 19b along with the motor 51 moves away from the bobbin holder 19a on the opposite side. Consequently, the hold on the winding bobbin 22 (package 30) is released.

In the direct-drive method according to the present embodiment, a layout is adopted in which the motor 51 directly drives an end of the winding bobbin 22. Therefore, the motor 51 is arranged on an extension of an axial line of the winding bobbin 22. In a structure in which the hold on the winding bobbin 22 is released by pivoting the cradle arm on the motor 51 side during the doffing operation, as in the present embodiment, a certain measure of space needs to be provided between the motor 51 and the housing 17 so that the motor 51, etc., can be moved. Due to these reasons, in a conventional automatic winder, a larger motor with a larger torque cannot be mounted on the cradle 23. Therefore, with the conventional automatic winder it is not possible to obtain a larger torque required for realizing a larger package 30, and hence a good winding operation is not possible.

However, the motor 51 according to the present embodiment has a larger torque, and at the same time, the motor 51 is compact in the axial direction. Therefore, the automatic winder according to the present embodiment can rotationally drive the winding bobbin 22 with adequate torque even if the size of the package 30 is larger and perform the winding operation efficiently.

As explained above, the motor 51 provided in the automatic winder according to the present embodiment includes the casing 61, the stators 64, the rotor 63, the first bearing 62, and the second bearing 92. The stators 64 are fixed to the casing 61. The rotor 63 is arranged inside the stators 64. The first bearing 62 and the second bearing 92 are arranged facing each other to provide support to the two ends of the rotor 63. The first bearing 62 includes the opposing face 62a that faces toward the opposing second bearing 92 side. The opposing face 62a is positioned closer to the second bearing 92 side than the bobbin holder side end face 64a of the stator 64. The second bearing 92 includes the opposing face 92a that faces the opposing first bearing 62 side. The opposing face 92a is positioned closer to the first bearing 62 side than the sensor side end face 64b of the stator 64.

With such an arrangement, the first bearing 62 and the second bearing 92 are positioned inside the outer peripheral surfaces of the stators 64. As a result, the dimension of the motor 51 in the axial direction can be made more compact, and a space-efficient winder unit 10 (automatic winder) can be achieved.

In the motor 51 according to the present embodiment, the rotor 63 has the first groove 72 formed on the end face on one side and the second groove 93 formed on the end face on the other side. The first bearing 62 is partially accommodated inside the first groove 72 and the second bearing 92 is partially accommodated inside the second groove 93.

With such an arrangement, because a lighter rotor 63 can be realized due to the first groove 72 and the second groove 93, an inertia of the rotor 63 can be reduced, and a responsiveness of the motor 51 can be effectively increased. Therefore, control of the rotational speed of the winding bobbin 22, winding commencement, winding termination, etc., can be performed smoothly and at precise timings. As a result, the yarn can be wound well on the winding bobbin 22, and a high quality package 30 can be produced. Furthermore, the spaces formed by the first groove 72 and the second groove 93 of the rotor 63 are effectively utilized to make the motor 51 more compact in the axial direction. Furthermore, because of the structure in which the first bearing 62 is accommodated inside the rotor 63, and the second bearing 92 is accommodated inside the second groove 93, the motor 51 that has a larger torque while being compact in the axial direction can be achieved by increasing the diameter of the rotor 63.

In the motor 51 according to the present embodiment, the casing 61 includes two bearing supporting units 77, one each for supporting the first bearing 62 and the second bearing 92. The bearing supporting units 77 are made of a non-magnetic material. Therefore, the bearing supporting units 77 are not magnetized. As a result, for example, even if the motor 51 has a structure in which a distance between the second bearing 92 and the first bearing 62 in the axial direction is made shorter than that shown in FIGS. 2 and 3, and the bearing supporting units 77 and the rotor 63 that rotates due to the magnetic force are brought closer together (as in the case when the second bearing 92 and the first bearing 62 are arranged closer to each other), the rotation of the rotor 63 being adversely affected due to magnetized bearing supporting units 77 is prevented. In other words, the distance between the second bearing 92 and the first bearing 62 can be made shorter by making the bearing supporting units 77 out of a non-magnetic material. Thus, the size of the motor 51 in the axial direction can be made more compact, as compared to when a non-magnetic material is not used in the bearing supporting units 77.

In the motor 51 according to the present embodiment, the rotor 63 directly drives the winding bobbin 22. With such an arrangement, the rotational drive of the winding bobbin 22 can be controlled more precisely. Because the motor 51 is compact in the axial direction, the structure used for direct driving of the winding bobbin 22 can be made compact in the axial direction.

The winder unit 10 according to the present embodiment includes the cradle 23. The cradle 23 rotatably supports the winding bobbin 22. The motor 51 is mounted in the cradle 23. The cradle 23 is built to be pivotable (openable and closable) in the axial direction (horizontal direction in FIG. 1) to enable the winding bobbin 22 to attach to and detach from the cradle 23.

With such an arrangement, even if there is a space constraint for arranging the winder units 10 and not enough space for opening and closing of the cradle 23 can be secured, because of the compactness in the axial direction of the motor 51, there is no interference of the cradle 23 on which the motor 51 is mounted with other parts (for example, an adjoining casing of the winder unit 10). As a result, the opening and closing operations of the cradle 23 to enable the winding bobbin 22 to attach and detach are appropriately performed.

In the motor 51 according to the present embodiment, the rotation sensor 67 is provided on the detection shaft 76 that rotates integrally with the rotor 63. The rotation sensor 67 is arranged on the opposite side of the rotor 63 with the second bearing 92 therebetween.

With such an arrangement, a structure is possible in which the rotation sensor 67 is integral with the motor 51 while maintaining the compactness of the motor 51 in the axial direction. Thus, efficiency can be achieved in an assembly operation of the motor 51. Furthermore, because the rotation of the detection shaft 76 that rotates integrally with the rotor 63 can be detected directly, a precise rotational speed of the winding bobbin 22 can be obtained.

The structure of the above-described embodiment can be further modified as explained below.

The positional relationship of the first bearing 62 and the second bearing 92 in relation to the stator 64 need not be limited to that explained with reference to FIGS. 2 and 3 as long as the conditions explained in the above-described embodiment are satisfied. In other words, the conditions are satisfied if the opposing face 62a of the first bearing 62 is positioned closer to the second bearing 92 side than the bobbin holder side end face 64a of the stator 64, and the opposing face 92a of the second bearing 92 is positioned closer to the first bearing 62 side than the sensor side end face 64b of the stator 64. For example, the motor 51 can have a structure such that the first bearing 62 and the second bearing 92 are arranged closer to each other in the axial direction than in the structure in the embodiment described above. Moreover, a structure is also possible in which either one of the end faces of the first bearing 62 and the second bearing 92 is positioned closer to the opposing bearing side than the outer end face (bobbin holder side end face 64a or sensor side end face 64b) of the stator 64.

In the above-described embodiment, the bearing supporting units 77 of the casing 61 are made of a non-magnetic material. Apart from the bearing supporting units 77, the parts near the bearing supporting units 77, and also the entire casing 61 can be made of a non-magnetic material. The bearing supporting units 77 can be made of any material other than a non-magnetic material provided the first bearing 62 and the second bearing 92 are arranged such that the rotor 63 is not affected by the magnetization of the bearing supporting units 77.

In the above-described embodiment, an arm-type traversing device 27 is used. However, the structure of the traversing device 27 can be modified to suit the situation. For example, in the winder unit 10, a belt-type traversing device can be used instead of the arm type traversing device 27 for traversing the yarn.

Furthermore, instead of the motor 51 rotationally driving the package 30 directly, a structure can be used in which the motor 51 drives a contact roller 29 and the rotational drive of the contact roller 29, in turn, rotationally drives the package 30. Furthermore, the motor 51 according to the present invention can be adopted as a driving means for driving a winding drum with a traversing groove formed for the purpose of traversing on a peripheral surface thereof. In such a structure, the traversing device 27 can be omitted as the traversing of the yarn is carried out by the traversing groove. In either of the above-explained structures, a space-efficient winder unit 10 (automatic winder) can be achieved by using the motor 51 according to the present invention.

Application of the present invention is not limited to automatic winders but can be extended to other yarn winding machines, such as spinning machines. The motor 51 according to the present embodiment can be adopted, for example, as a motor that drives a draft roller in a drafting device that forms a fiber bundle by drafting a sliver. Furthermore, the motor 51 according to the present embodiment can also be adopted as a motor that drives a yarn storing device in the spinning machine that includes the drafting device, an air spinning device, the yarn storing device, and a winding device. Similar to the winder unit 10, space-efficiency can be achieved by using the motor 51 according to the present embodiment in the spinning machine.

## Claims

1. A yarn winding machine comprising a driving section (51) that rotationally drives a winding tube on which yarn is wound, and/or a draft roller that forms a fiber bundle by drafting a sliver and/or a yarn storing roller that temporarily stores yarn that is wound into a package, a casing (61), the driving section (51) including a casing (61), stators (64) that are fixed to the casing (61), a rotor (63) arranged inside the stators (64), and bearings (62, 92) that are arranged facing each other to provide support to the two ends of the rotor (63),
**characterized in that** a groove (72, 92) is formed on at least one end face of the rotor (63), and at least one of the bearings (62, 92) is accommodated, at least partially, inside the groove (72, 92).

2. The yarn winding machine according to Claim 1, **characterized in that** the casing (61) includes bearing supporting units (77) that support the bearings (62, 92), and at least the bearing supporting units (77) of the casing (61) are made of a non-magnetic material.

3. The yarn winding machine according to Claim 1 or Claim 2, **characterized in that** the rotor (63) is constructed to directly drive the winding tube.

4. The yarn winding machine according to any one of Claims 1-3, **characterized in that** a winding tube supporting unit (23) rotatably supports the winding tube, and on which the driving section (51) is arranged, and
the winding tube supporting unit (23) is openable and closable to enable the winding tube to attach to and detach from the winding tube supporting unit (23).

5. The yarn winding machine according to any one of Claim 1-4, **characterized by** further comprising a rotation detecting unit (67) provided on an end face of the rotor (63) on one side of the rotor (63) in the axial direction of the rotor (63) or at a member (76) that rotates integrally with the rotor (63),
**characterized in that** the rotation detecting unit (67) is arranged on an opposite side of the rotor (63) with the bearing (92) there between.
